# EUROPEAN PATENT APPLICATION

(11) **EP 4 843 929 A1**
(43) Date of publication of application: **25.11.2026**
(21) Application number: 25209940.3
(22) Date of filing: 21.10.2025
(51) Int. Cl.: B65G 43/08, B65G 15/30

(54) **OBJECT STOP POSITION CONTROL SYSTEM AND METHOD**

(30) Priority: 23.05.2025 TW 114119533
(71) Applicant: Test Research, Inc., Taipei City 11158 (TW)
(72) Inventor: Shen, Yu-Chen, 11158 Taipei City (TW); Chang, Yung-Wei, 11158 Taipei City (TW)
(74) Representative: Berggren Oy

(57) **Abstract**

The present disclosure provides an object stop position control system, which includes a controller and a sensor. The sensor is electrically connected to the controller, and the controller is electrically connected to the conveying device. The controller controls the conveying device to make the object move a preset displacement in a first direction. The controller further controls the conveying device to move the object back and forth across the sensor and repeatedly confirms the change in the sensing result of the second sensor.

## Description

### BACKGROUND

### Field of Invention

The present invention relates to hardware devices and control methods, and more particularly, object stop position control systems and methods.

### Description of Related Art

The current structure uses conventional technology to move the object under test to the front of a baffle by using a conveyor belt and a conveyor belt shaft controller. Conventional technology ensures that the object under test stops at a roughly correct position. The conveyor belt then continues forward and the baffle acts as a mechanical limiter to ensure that the object under test stops at the correct position.

In view of the foregoing, there still exist some problems that await further improvement. In order to solve the problem of damage to the object under test caused by the conveyor belt moving the object under test quickly to hit the baffle under the premise of timeliness, or the time-related loss caused by the conveyor belt moving the object under test slowly under the premise of not damaging the object under test, those skilled in the art sought vainly for a solution. Accordingly, there is an urgent need in the related field to effectively improve the accuracy and speed of the stop position without using a mechanical limit manner.

### SUMMARY

The following presents a simplified summary of the disclosure in order to provide a basic understanding to the reader. This summary is not an extensive overview of the disclosure and it does not identify key/critical components of the present invention or delineate the scope of the present invention. Its sole purpose is to present some concepts disclosed herein in a simplified form as a prelude to the more detailed description that is presented later.

According to embodiments of the present disclosure, the present disclosure provides object stop position control systems and methods, to solve or circumvent aforesaid problems and disadvantages in the related art.

An embodiment of the present disclosure is related to an object stop position control system includes a controller and a sensor. The controller is electrically connected to a conveyor device, and the sensor is electrically connected to the controller. The controller is configured to control the conveyor device to make an object move a preset displacement in a first direction, and the controller is further configured to control the conveyor device to move the object back and forth across the sensor and to repeatedly confirm a change of a sensing result of the sensor.

In one embodiment of the present disclosure, after the controller controls the conveyor device to make the object move the preset displacement in the first direction, and before the controller controls the conveyor device to move the object back and forth across the sensor, the controller confirms whether the sensor senses the object for updating a next preset displacement.

In one embodiment of the present disclosure, after the controller controls the conveyor device to make the object move the preset displacement in the first direction, and before the controller controls the conveyor device to move the object back and forth across the sensor, when the sensor has sensed the object, the controller subtracts a corrected value from the preset displacement to obtain the next preset displacement.

In one embodiment of the present disclosure, after the controller obtains the next preset displacement, the controller controls the conveyor device to make the object move a predetermined distance displacement in a second direction each time until the sensor no longer senses the object, and the controller controls the conveyor device to make the object move a predetermined microstep displacement in the first direction each time until the sensor senses the object, where the first direction is opposite to the second direction, and the predetermined microstep displacement is less than the predetermined distance displacement.

In one embodiment of the present disclosure, after the controller controls the conveyor device to make the object move the preset displacement in the first direction, and before the controller controls the conveyor device to move the object back and forth across the sensor, when the sensor does not sense the object, the controller adds a corrected value to the preset displacement to obtain the next preset displacement.

In one embodiment of the present disclosure, after the controller obtains the next preset displacement, the controller controls the conveyor device to make the object move a predetermined distance displacement in the first direction each time until the sensor senses the object, the controller controls the conveyor device to make the object move the predetermined distance displacement in a second direction each time until the sensor no longer senses the object, and the controller controls the conveyor device to make the object move a predetermined microstep displacement in the first direction each time until the sensor senses the object, where the first direction is opposite to the second direction, and the predetermined microstep displacement is less than the predetermined distance displacement.

Another embodiment of the present disclosure is related to an object stop position control method includes steps of: utilizing a controller to control a conveyor device to make an object move a preset displacement in a first direction; and utilizing the controller further to control the conveyor device to move the object back and forth across a sensor and to repeatedly confirm a change of a sensing result of the sensor.

In one embodiment of the present disclosure, the object stop position control method further includes: after the controller controls the conveyor device to make the object move the preset displacement in the first direction, and before the controller controls the conveyor device to move the object back and forth across the sensor, utilizing the controller to confirm whether the sensor senses the object for updating a next preset displacement.

In one embodiment of the present disclosure, the step of utilizing the controller to confirm whether the sensor senses the object for updating the next preset displacement includes: when the sensor has sensed the object, utilizing the controller to subtract a corrected value from the preset displacement to obtain the next preset displacement.

In one embodiment of the present disclosure, the step of utilizing the controller further to control the conveyor device to move the object back and forth across the sensor and to repeatedly confirm the change in the sensing result of the sensor includes: after the controller obtains the next preset displacement, utilizing the controller to control the conveyor device to make the object move a predetermined distance displacement in a second direction each time until the sensor no longer senses the object; and utilizing the controller to control the conveyor device to make the object move a predetermined microstep displacement in the first direction each time until the sensor senses the object, where the first direction is opposite to the second direction, and the predetermined microstep displacement is less than the predetermined distance displacement.

In one embodiment of the present disclosure, the step of utilizing the controller to confirm whether the sensor senses the object for updating the next preset displacement includes: when the sensor does not sense the object, utilizing the controller to add a corrected value to the preset displacement to obtain the next preset displacement.

In one embodiment of the present disclosure, the step of utilizing the controller further to control the conveyor device to move the object back and forth across the sensor and to repeatedly confirm the change in the sensing result of the sensor includes: after the controller obtains the next preset displacement, utilizing the controller to control the conveyor device to make the object move a predetermined distance displacement in the first direction each time until the sensor senses the object; utilizing the controller to control the conveyor device to make the object move the predetermined distance displacement in a second direction each time until the sensor no longer senses the object; and utilizing the controller to control the conveyor device to make the object move a predetermined microstep displacement in the first direction each time until the sensor senses the object, where the first direction is opposite to the second direction, and the predetermined microstep displacement is less than the predetermined distance displacement.

Yet another embodiment of the present disclosure is related to an object stop position control method includes steps of: utilizing a controller to control a conveyor device to make an object move a preset displacement in a first direction; utilizing the controller to confirm whether a sensor senses the object after the object is moved in the first direction by the preset displacement; and utilizing the controller further to control the conveyor device to move the object back and forth across the sensor and to repeatedly confirm a change of a sensing result of the sensor.

In one embodiment of the present disclosure, the step of utilizing the controller further to control the conveyor device to move the object back and forth across the sensor and to repeatedly confirm the change in the sensing result of the sensor includes: when the sensor has sensed the object, utilizing the controller to control the conveyor device to make the object move a predetermined distance displacement in a second direction each time until the sensor no longer senses the object; and utilizing the controller to control the conveyor device to make the object move a predetermined microstep displacement in the first direction each time until the sensor senses the object, where the first direction is opposite to the second direction, and the predetermined microstep displacement is less than the predetermined distance displacement.

In one embodiment of the present disclosure, the step of utilizing the controller further to control the conveyor device to move the object back and forth across the sensor and to repeatedly confirm the change in the sensing result of the sensor includes: when the sensor does not sense the object, utilizing the controller to control the conveyor device to make the object move a predetermined distance displacement in the first direction each time until the sensor senses the object; utilizing the controller to control the conveyor device to make the object move the predetermined distance displacement in a second direction each time until the sensor no longer senses the object; and utilizing the controller to control the conveyor device to make the object move a predetermined microstep displacement in the first direction each time until the sensor senses the object, where the first direction is opposite to the second direction, and the predetermined microstep displacement is less than the predetermined distance displacement.

In view of the above, technical advantages are generally achieved, by embodiments of the present disclosure. The object stop position control system and method of the present disclosure effectively improve the accuracy of the object's stop position, without a baffle or a stop mechanism. Furthermore, since the baffle or the stop mechanism is eliminated, the controller can quickly move the object (e.g., an object under test) to the approximate target position by the preset displacement, without the risk of hit.

Many of the attendant features will be more readily appreciated, as the same becomes better understood by reference to the following detailed description considered in connection with the accompanying drawings.

### BRIEF DESCRIPTION OF THE DRAWINGS

The invention can be more fully understood by reading the following detailed description of the embodiment, with reference made to the accompanying drawings as follows:
Fig. 1 is a flow chart of an object stop position control method according to some embodiments of the present disclosure;
Fig. 2 is a schematic diagram of an object stop position control system according to some embodiments of the present disclosure;
Fig. 3 is a timing diagram of positions of an object according to some embodiments of the present disclosure; and
Fig. 4 is a timing diagram of positions of an object according to some embodiments of the present disclosure.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

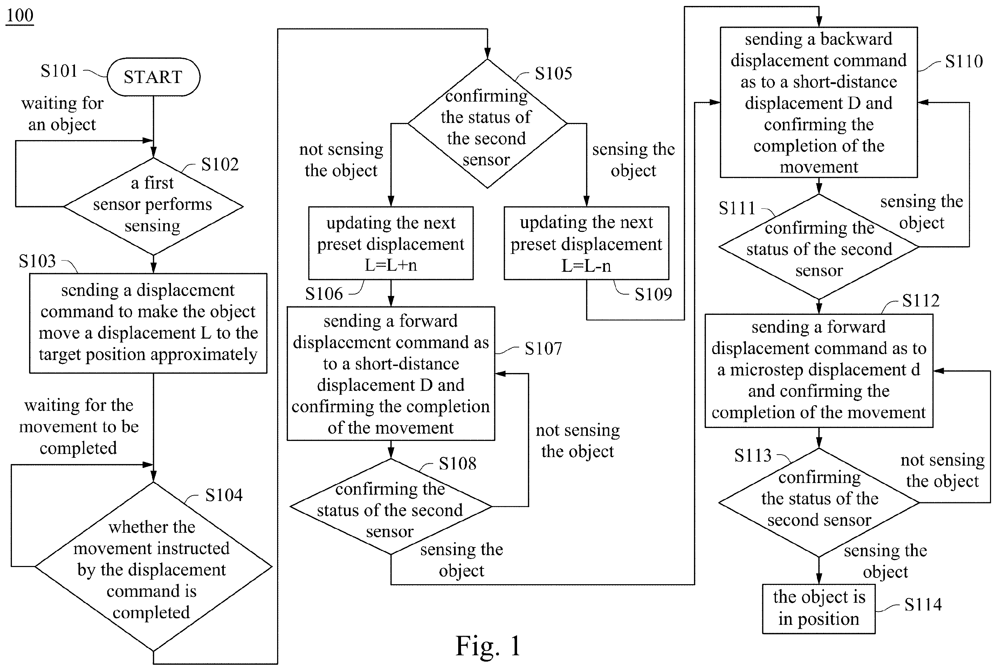

Referring to Fig. 1, in one aspect, the present disclosure is directed to an object stop position control method 100. This object stop position control method 100 may be easily integrated into a testing machine and may be applicable or readily adaptable to all technologies. Accordingly, the object stop position control method 100 has advantages. Herewith the object stop position control method 100 is described below with Fig. 1.

The subject disclosure provides the object stop position control method 100 in accordance with the subject technology. Various aspects of the present technology are described with reference to the drawings. In the following description, for purposes of explanation, numerous specific details are set forth in order to provide a thorough understanding of one or more aspects. It can be evident, however, that the present technology can be practiced without these specific details. In other instances, well-known structures and devices are shown in block diagram form in order to facilitate describing these aspects. The word "exemplary" is used herein to mean "serving as an example, instance, or illustration." Any embodiment described herein as "exemplary" is not necessarily to be construed as preferred or advantageous over other embodiments.

Fig. 1 is a flow chart of the object stop position control method 100 according to some embodiments of the present disclosure. As shown in Fig. 1, the object stop position control method 100 includes steps S101 and S114. However, as could be appreciated by persons having ordinary skill in the art, for the steps described in the present embodiment, the sequence in which these steps is performed, unless explicitly stated otherwise, can be altered depending on actual needs; in certain cases, all or some of these steps can be performed concurrently.

The object stop position control method 100 may take the form of a computer program product on a computer-readable storage medium having computer-readable instructions embodied in the medium. Any suitable storage medium may be used including non-memory device such as read only memory (ROM), programmable read only memory (PROM), erasable programmable read only memory (EPROM), and electrically erasable programmable read only memory (EEPROM) devices; memory device such as SRAM, DRAM, and DDR-RAM; optical storage devices such as CD-ROMs and DVD-ROMs; and magnetic storage devices such as hard disk drives and floppy disk drives.

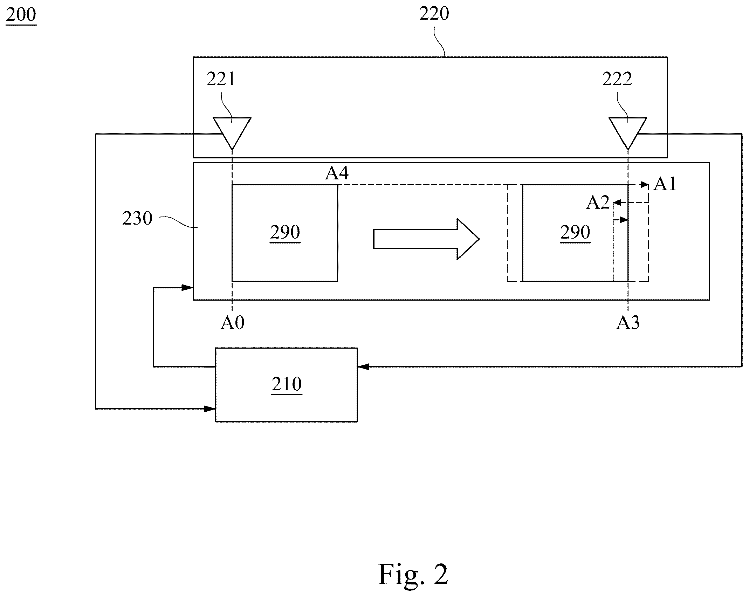

For a more complete understanding of hardware architecture applicable to the object stop position control method 100, referring Fig. 1 and Fig. 2, Fig. 2 is a schematic diagram of an object stop position control system according to some embodiments of the present disclosure. As shown in Fig. 2, the object stop position control system 200 includes a controller 210 and a sensor 220.

In structure, the sensor 220 is electrically connected to the controller 210, and the controller 210 is electrically connected to the conveyor device 230. It should be noted that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. For example, the controller 210 can be directly electrically connected to the conveyor device 230, or the controller 210 can be indirectly electrically connected to the conveyor device 230 through external circuits.

In use, the controller 210 controls the conveyor device 230 (e.g., a conveyor belt) to carry the object 290 forward or backward. If the object 290 enters the conveyor device 230, the sensor 220 detects whether the object 290 (e.g., the edge of the object 290) has reached a specified position.

In practice, for example, the controller 210 can be a motion controller, a shaft controller, a digital controller, or another control circuit, and the sensor 220 can be a reflective optical sensor, a contrast optical sensor, or another non-contact sensor capable of on/off digital output. The conveyor device 230 can be a conveyor belt, a conveyor track, or other conveying hardware equipment. The object 290 can be an object under test, such as a circuit board, a capacitor, a chip, a wafer, a display panel, or another electronic product under test.

In practice, for example, the sensor 220 can be separated into a first sensor 221 and a second sensor 222, and the first sensor 221 and the second sensor 222 can be disposed at a designated position on the conveyor device 230 (e.g., an object posterior margin detachment position A0 and an object anterior margin target position A3), respectively, but the present disclosure is not limited thereto. Alternatively, for example, the first sensor 221 and the second sensor 222 can be mounted on a replaceable assembly, such as a jig, with their mounting positions aligned with the desired stop position for the object 290 (e.g., the object posterior margin detachment position A0 and the object anterior margin target position A3), but the present disclosure is not limited thereto. Alternatively, the first sensor 221 and the second sensor 222 can be integrated into the same sensor 220, which is mounted on a movable mechanism. The movable mechanism dynamically changes the position of the sensor 220, thereby changing the stop position for the object 290 on the conveyor device 230. For example, when the sensor 220 moves to the object posterior margin detachment position A0, it functions as the first sensor 221; when the sensor 220 moves to the object anterior margin target position A3, it functions as the second sensor 222, but the present disclosure is not limited thereto.

Referring to both Fig. 1 and Fig. 2, in step S101, the object stop position control system 200 starts to execute the object stop position control method 100. In step S102, the sensor 220 performs sensing. After the sensor 220 (e.g., the first sensor 221) senses the object 290 on the conveyor device 230, the controller 210 sends a displacement command to the conveyor device 230 in step S103. Accordingly, the controller 210 controls the conveyor device 230 to make the object 290 move a preset displacement (e.g., a displacement L) in a first direction, thereby moving the object 290 at high speed to approximately the object anterior margin target position A3 (e.g., the position of the second sensor 222), without regard to accuracy. In step S104, the controller 210 confirms whether the conveyor device 230 has completed the movement instructed by the displacement command.

As used herein, "around", "about", "substantially" or "approximately" shall generally mean within 20 percent, preferably within 10 percent, and more preferably within 5 percent of a given value or range. Numerical quantities given herein are approximate, meaning that the term "around", "about", "substantially" or "approximately" can be inferred if not expressly stated.

Moreover, in steps S107, S108, and S110-S114, the controller 210 controls the conveyor device 230 to move the object 290 back and forth across the sensor 220 (e.g., the second sensor 222), and the controller 210 repeatedly confirms the change in the sensing result of the sensor 220, thereby improving the accuracy of determining whether the object 290 has reached the object anterior margin target position A3.

In some embodiments of the present disclosure, after the controller 210 controls the conveyor device 230 to make the object 290 move the preset displacement (e.g., the displacement L) in the first direction in step S102, and before the controller 210 controls the conveyor device 230 to move the object 290 back and forth across the sensor 220 in steps S107, S108, and S110-S114, the controller 210 confirms whether the sensor 220 senses the object 290 for updating a next preset displacement in steps S105, S106, and S109, thereby dynamically correcting changes in some factors, such as the belt tension, surface friction and so on, of the conveyor device 230.

In some embodiments of the present disclosure, after the controller 210 controls the conveyor device 230 to make the object 290 move the preset displacement (e.g., the displacement L) in the first direction in step S102, and before the controller 210 controls the conveyor device 230 to move the object back and forth across the sensor 220 in steps S107, S108, and S110-S114, the controller 210 confirms the status of the sensor 220 (e.g., the second sensor 222) in step S105. When the sensor 220 (e.g., the second sensor 222) senses the object 290 in step S105, the controller 210 subtracts the corrected value (e.g., a corrected value n) from the preset displacement (e.g., the displacement L) in step S109 to obtain the next preset displacement in step S109, thereby dynamically correcting changes in some factors, such as the belt tension, surface friction and so on, of the conveyor device 230.

In some embodiments of the present disclosure, after the controller 210 obtains the next preset displacement in step S109, the controller 210 sends a backward displacement command to the conveyor device 230 in steps S110 and S111. Accordingly, the controller 210 controls the conveyor device 230 to make the object 290 move a predetermined distance displacement (e.g., a short-distance displacement D) in a second direction each time and confirms whether the movement of the conveyor device 230 instructed by the backward displacement command is completed until the sensor 220 (e.g., the second sensor 222) no longer senses the object 290. In steps S112 and S113, the controller 210 sends a forward displacement command to the conveyor device 230. Accordingly, the controller 210 controls the conveyor device 230 to make the object 290 move a predetermined microstep displacement (e.g., a microstep displacement d) in the first direction each time and confirms whether the movement of the conveyor device 230 instructed by the forward displacement command is completed until the sensor 220 (e.g., the second sensor 222) senses the object 290. In step S114, the controller 210 determines that the object 290 is in position. In practice, for example, the first direction (e.g., forward) is opposite to the second direction (e.g., backward), and the predetermined microstep displacement (e.g., the microstep displacement d) is less than the predetermined distance displacement (e.g., the short-distance displacement D). Since the moving distance is very short, the forward microstep speed barely affects the overall conveying time. Furthermore, since the forward microstep speed is slow, the displacement error caused by the inertia of the object 290 moved through the conveyor belt can be ignored.

In some embodiments of the present disclosure, after the controller 210 controls the conveyor device 230 to make the object 290 move the preset displacement (e.g., the displacement L) in the first direction in step S102, and before the controller 210 controls the conveyor device 230 to move the object 290 back and forth across the sensor 220 in steps S107, S108, and S110-S114, the controller 210 confirms the status of the sensor 220 (e.g., the second sensor 222) in step S105. If the sensor 220 (e.g., the second sensor 222) does not sense the object 290 in step S105, the controller 210 adds the preset displacement (e.g., the displacement L) to the corrected value (e.g., the corrected value n) to obtain the next preset displacement in step S106, thereby dynamically correcting changes in some factors, such as the belt tension, surface friction and so on, of the conveyor device 230.

In some embodiments of the present disclosure, after the controller 210 obtains the next preset displacement in step S106, the controller 210 sends a forward displacement command to the conveyor device 230 in steps S107 and S108. Accordingly, the controller 210 controls the conveyor device 230 to make the object 290 move the predetermined distance displacement (e.g., short-distance displacement D) in the first direction each time and confirms whether the movement of the conveyor device 230 instructed by the forward displacement command is completed until the sensor 220 (e.g., the second sensor 222) senses the object 290. In steps S110 and S111, the controller 210 sends the backward displacement command to the conveyor device 230. Accordingly, the controller 210 controls the conveyor device 230 to make the object 290 move the predetermined distance displacement (e.g., the short-distance displacement D) in the second direction each time and confirms whether the movement of the conveyor device 230 instructed by the backward displacement command is completed until the sensor 220 (e.g., the second sensor 222) no longer senses the object 290. In steps S112 and S113, the controller 210 sends a forward displacement command to the conveyor device 230. Accordingly, the controller 210 controls the conveyor device 230 to make the object 290 move the predetermined microstep displacement (e.g., the microstep displacement d) in the first direction each time. The controller 210 then confirms whether the movement of the conveyor device 230 instructed by the forward displacement command is completed until the sensor 220 (e.g., the second sensor 222) senses the object 290. In step S114, the controller 210 determines that the object 290 is in position. In practice, for example, the first direction (e.g., forward) is opposite to the second direction (e.g., backward), and the predetermined microstep displacement (e.g., microstep displacement d) is less than the predetermined distance displacement (e.g., short-distance displacement D). Since the moving distance is very short, the forward microstep speed barely affects the overall conveying time. Furthermore, since the forward microstep speed is slow, the displacement error caused by the inertia of the object 290 moved through the conveyor belt can be ignored.

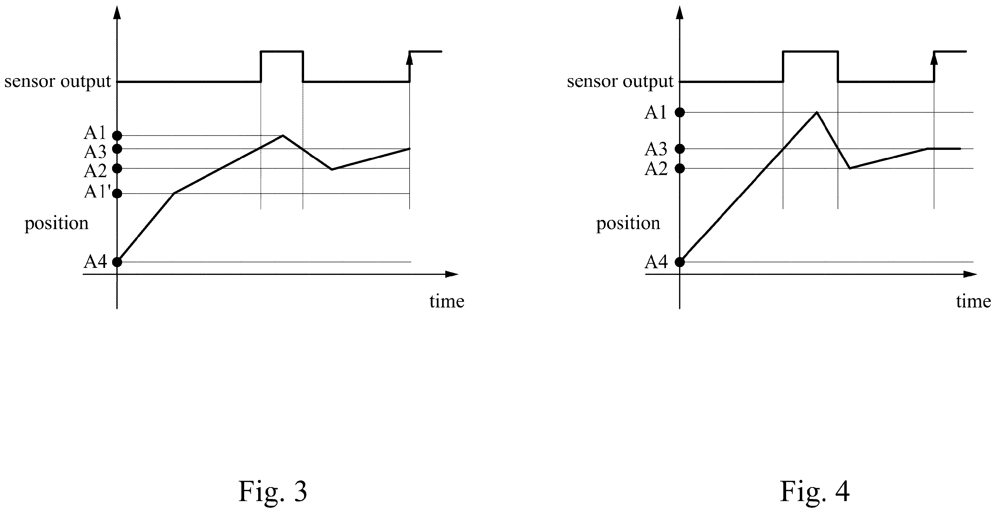

For further explanation of steps S102-105 and S107-114, referring to Figs 1-3. Fig. 3 is a timing diagram of positions A1, A1', A2, A3 and A4 of the object 290 according to some embodiments of the present disclosure. The controller 210 sends above-mentioned displacement commands. In step S105, it determines that the object 290 fails to pass the second sensor 222 and stops at position A1'. Then, in steps S107 and S108, the controller 210 controls the conveyor device 230 to continue conveying forward until the object 290 passes the position A1 of the second sensor 222. The convergence as to the stop position in steps S110 and S111 begins, and the object 290 moves backward from the position A1 to the position A2. In steps S112-S114, the object 290 slowly moves forward in microsteps to the position A3 as to the on/off boundary of the second sensor 222.

For further explanation of steps S102-105 and S109-114, referring to Figs 1, 2, and 4. Fig, 4 is a timing diagram of positions A1, A2, A3, and A4 of the object 290 according to some embodiments of the present disclosure. The controller 210 sends above-mentioned displacement commands. The object 290 moves from the position A4 to the position A1 (beyond the second sensor 222). The convergence as to the stop position in steps S110 and S111 begins, and the object 290 moves backward from position A1 to position A2. In steps S112-S114, the object 290 moves forward slowly in microsteps to position A3 as to the on/off boundary of the second sensor 222.

In view of the above, technical advantages are generally achieved, by embodiments of the present disclosure. The object stop position control system 200 and the object stop position control method 100 of the present disclosure effectively improve the accuracy of the stop position of the object 290, without a baffle or a stop mechanism. Furthermore, since the baffle or the stop mechanism is eliminated, the controller 210 can quickly move the object 290 (e.g., an object under test) to the approximate target position by the preset displacement, without the risk of hit. Since the baffle is eliminated, the object (e.g., the object to be measured) can be moved to the approximate target position at high speed, thereby reducing the overall conveying time and improving efficiency. Since the baffle is eliminated, the object 290 can be moved back and forth across the original baffle's position to the target position, thereby maintaining the accuracy of the stop position. Since the baffle is eliminated, the result of the first movement of the object 290 may be ahead of or behind the original baffle's position, and this result can be used to correct the displacement command for the next time entrance of the object 290

## Claims

1. An object stop position control system (200), comprising:
a controller (210) electrically connected to a conveyor device (230); and
a sensor (220) electrically connected to the controller (210), the controller (210) configured to control the conveyor device (230) to make an object (290) move a preset displacement in a first direction, and the controller (210) further configured to control the conveyor device (230) to move the object (290) back and forth across the sensor (220) and to repeatedly confirm a change of a sensing result of the sensor (220).

2. The object stop position control system (200) of claim 1, wherein after the controller (210) controls the conveyor device (230) to make the object (290) move the preset displacement in the first direction, and before the controller (210) controls the conveyor device (230) to move the object (290) back and forth across the sensor (220), the controller (210) confirms whether the sensor (220) senses the object (290) for updating a next preset displacement.

3. The object stop position control system (200) of claim 2, wherein after the controller (210) controls the conveyor device (230) to make the object (290) move the preset displacement in the first direction, and before the controller (210) controls the conveyor device (230) to move the object (290) back and forth across the sensor (220), when the sensor (220) has sensed the object (290), the controller (210) subtracts a corrected value from the preset displacement to obtain the next preset displacement.

4. The object stop position control system (200) of claim 3, wherein after the controller (210) obtains the next preset displacement, the controller (210) controls the conveyor device (230) to make the object (290) move a predetermined distance displacement in a second direction each time until the sensor (220) no longer senses the object (290), and the controller (210) controls the conveyor device (230) to make the object (290) move a predetermined microstep displacement in the first direction each time until the sensor (220) senses the object (290), wherein the first direction is opposite to the second direction, and the predetermined microstep displacement is less than the predetermined distance displacement.

5. The object stop position control system (200) of claim 2, wherein after the controller (210) controls the conveyor device (230) to make the object (290) move the preset displacement in the first direction, and before the controller (210) controls the conveyor device (230) to move the object (290) back and forth across the sensor (220), when the sensor (220) does not sense the object (290), the controller (210) adds a corrected value to the preset displacement to obtain the next preset displacement.

6. The object stop position control system (200) of claim 5, wherein after the controller (210) obtains the next preset displacement, the controller (210) controls the conveyor device (230) to make the object (290) move a predetermined distance displacement in the first direction each time until the sensor (220) senses the object (290), the controller (210) controls the conveyor device (230) to make the object (290) move the predetermined distance displacement in a second direction each time until the sensor (220) no longer senses the object (290), and the controller (210) controls the conveyor device (230) to make the object (290) move a predetermined microstep displacement in the first direction each time until the sensor (220) senses the object (290), wherein the first direction is opposite to the second direction, and the predetermined microstep displacement is less than the predetermined distance displacement.

7. An object stop position control method (100), comprising steps of:
utilizing a controller (210) to control a conveyor device (230) to make an object (290) move a preset displacement in a first direction; and
utilizing the controller (210) further to control the conveyor device (230) to move the object (290) back and forth across a sensor (220) and to repeatedly confirm a change of a sensing result of the sensor (220).

8. The object stop position control method (100) of claim 7, further comprising:
after the controller (210) controls the conveyor device (230) to make the object (290) move the preset displacement in the first direction, and before the controller (210) controls the conveyor device (230) to move the object (290) back and forth across the sensor (220), utilizing the controller (210) to confirm whether the sensor (220) senses the object (290) for updating a next preset displacement.

9. The object stop position control method (100) of claim 8, wherein the step of utilizing the controller (210) to confirm whether the sensor (220) senses the object (290) for updating the next preset displacement comprises:
when the sensor (220) has sensed the object (290), utilizing the controller (210) to subtract a corrected value from the preset displacement to obtain the next preset displacement.

10. The object stop position control method (100) of claim 9, wherein the step of utilizing the controller (210) further to control the conveyor device (230) to move the object (290) back and forth across the sensor (220) and to repeatedly confirm the change in the sensing result of the sensor (220) comprises:
after the controller (210) obtains the next preset displacement, utilizing the controller (210) to control the conveyor device (230) to make the object (290) move a predetermined distance displacement in a second direction each time until the sensor (220) no longer senses the object (290); and
utilizing the controller (210) to control the conveyor device (230) to make the object (290) move a predetermined microstep displacement in the first direction each time until the sensor (220) senses the object (290), wherein the first direction is opposite to the second direction, and the predetermined microstep displacement is less than the predetermined distance displacement.

11. The object stop position control method (100) of claim 8, wherein the step of utilizing the controller (210) to confirm whether the sensor (220) senses the object (290) for updating the next preset displacement comprises:
when the sensor (220) does not sense the object (290), utilizing the controller (210) to add a corrected value to the preset displacement to obtain the next preset displacement.

12. The object stop position control method (100) of claim 9, wherein the step of utilizing the controller (210) further to control the conveyor device (230) to move the object (290) back and forth across the sensor (220) and to repeatedly confirm the change in the sensing result of the sensor (220) comprises:
after the controller (210) obtains the next preset displacement, utilizing the controller (210) to control the conveyor device (230) to make the object (290) move a predetermined distance displacement in the first direction each time until the sensor (220) senses the object (290);
utilizing the controller (210) to control the conveyor device (230) to make the object (290) move the predetermined distance displacement in a second direction each time until the sensor (220) no longer senses the object (290); and
utilizing the controller (210) to control the conveyor device (230) to make the object (290) move a predetermined microstep displacement in the first direction each time until the sensor (220) senses the object (290), wherein the first direction is opposite to the second direction, and the predetermined microstep displacement is less than the predetermined distance displacement.

13. An object stop position control method (100), comprising steps of:
utilizing a controller (210) to control a conveyor device (230) to make an object (290) move a preset displacement in a first direction;
utilizing the controller (210) to confirm whether a sensor (220) senses the object (290) after the object (290) is moved in the first direction by the preset displacement; and
utilizing the controller (210) further to control the conveyor device (230) to move the object (290) back and forth across the sensor (220) and to repeatedly confirm a change of a sensing result of the sensor (220).

14. The object stop position control method (100) of claim 13, wherein the step of utilizing the controller (210) further to control the conveyor device (230) to move the object (290) back and forth across the sensor (220) and to repeatedly confirm the change in the sensing result of the sensor (220) comprises:
when the sensor (220) has sensed the object (290), utilizing the controller (210) to control the conveyor device (230) to make the object (290) move a predetermined distance displacement in a second direction each time until the sensor (220) no longer senses the object (290); and
utilizing the controller (210) to control the conveyor device (230) to make the object (290) move a predetermined microstep displacement in the first direction each time until the sensor (220) senses the object (290), wherein the first direction is opposite to the second direction, and the predetermined microstep displacement is less than the predetermined distance displacement.

15. The object stop position control method (100) of claim 13, wherein the step of utilizing the controller (210) further to control the conveyor device (230) to move the object (290) back and forth across the sensor (220) and to repeatedly confirm the change in the sensing result of the sensor (220) comprises:
when the sensor (220) does not sense the object (290), utilizing the controller (210) to control the conveyor device (230) to make the object (290) move a predetermined distance displacement in the first direction each time until the sensor (220) senses the object (290);
utilizing the controller (210) to control the conveyor device (230) to make the object (290) move the predetermined distance displacement in a second direction each time until the sensor (220) no longer senses the object (290); and
utilizing the controller (210) to control the conveyor device (230) to make the object (290) move a predetermined microstep displacement in the first direction each time until the sensor (220) senses the object (290), wherein the first direction is opposite to the second direction, and the predetermined microstep displacement is less than the predetermined distance displacement.
